(19) Europäisches Patentamt
European Patent Office
Office européen des brevets

(11) Veröffentlichungsnummer: **0 018 512**
**A2**

# (12) EUROPÄISCHE PATENTANMELDUNG

(21) Anmeldenummer: 80101879.7

(22) Anmeldetag: 09.04.80

(51) Int. Cl.³: **C 07 F 7/10**
A 61 K 31/695

(30) Priorität: 14.04.79 DE 2915355

(43) Veröffentlichungstag der Anmeldung: 12.11.80 Patentblatt 80/23

(84) Benannte Vertragsstaaten: AT BE CH FR GB IT LI LU NL SE

(71) Anmelder: **A. Nattermann & Cie. GmbH**
**Nattermannallee 1**
**D-5000 Köln 30(DE)**

(72) Erfinder: **Materne, Carsten, Dr.**
**Dr.Hans-Böckler-Strasse 31**
**Bonn-Beuel(DE)**

(72) Erfinder: **Betzing, Hans, Dr.**
**Heidstock 7**
**D-5014 Kerpen-Horrem(DE)**

(74) Vertreter: **Redies, Bernd, Dr. rer. nat. et al,**
**Redies, Redies, Türk & Gille Brucknerstrasse 20**
**D-4000 Düsseldorf 13(DE)**

## (54) 1,4-Dihydropyridin-Derivate und Arzneimittel, die sie enthalten.

(57) Die vorliegende Erfindung betrifft die neue 2,6-Dimethyl-4-(3'-nitrophenyl)-1, 4-dihydropyridin-3-carbonsäure-ß-trimethylsilyläthylester- 5-carbonsäureniederalkylester mit verzweigter oder geradkettiger Alkylgruppe mit 1 - 4 Kohlenstoffatomen und diese enthaltende Arzneimittel.

EP 0 018 512 A2

1,4-Dihydropyridin-Derivate mit verbesserter antihypertensiver Wirkung

Es ist bekannt, daß 1,4-Dihydropyridin-3,5-dicarbonsäureester vasodilatierende und antihypertensive Eigenschaften (DT-PS 1 007 827, F. Bossert, W. Vater, Naturwissenschaften 58, 578 (1971)) aufweisen.

Es wurde nun gefunden, daß die Einführung des Trimethylsilylesters in eine der Seitenketten der Estergruppierung zu 1,4-Dihydropyridin-Verbindungen führt, die eine Verstärkung der antihypertensiven Wirkung zeigen, wobei coronare und cerebraldilatierende Wirkungen nicht mehr beobachtet werden.

Die Erfindung betrifft daher die neuen 2,6-Dimethyl-4-(3'-nitrophenyl)-1,4-dihydropyridin-3-carbonsäure-ß-trimethylsilyläthylester-5-carbonsäure-niederalkylester der allgemeinen Formel

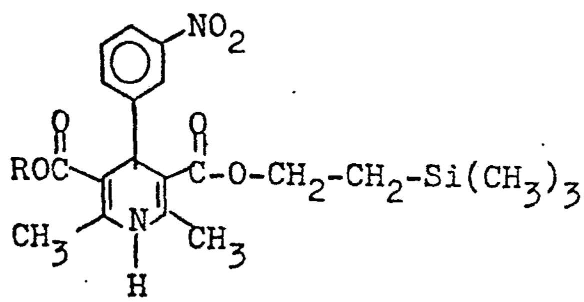

I

BAD ORIGINAL

in der R einen geradkettigen oder verzweigten Alkylrest mit 1 bis 4 C-Atomen bedeutet.

Die neuen antihypertensiv wirksamen Verbindungen zeigen beispielsweise am narkotisierten Hund in Dosen von 0,1 bis 1 mg/kg i.v. eine Senkung des systolischen Drucks um 20-30 mmHg. Der gleiche Dosierungsbereich gilt auch beim Menschen.

Die Herstellung der neuen Verbindungen kann in an sich bekannter Weise dadurch erfolgen, daß man 3-Aminocroton-säure-ß-trimethylsilyläthylester mit einem m-Nitrobenzylidenacetessigester der Formel

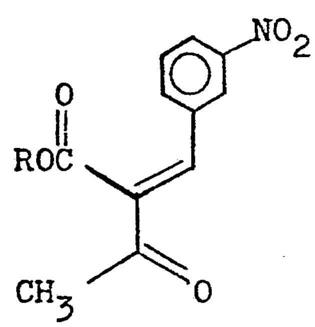

II

in der R die gleiche Bedeutung wie in Formel I besitzt, in organischen Lösungsmitteln, wie Alkoholen, Dioxan, Essigester, Eisessig, Dimethylformamid oder Acetonitril umsetzt. Die Reaktionstemperaturen können in einem Bereich zwischen 20 und 150°C variiert werden. Vorzugsweise arbeitet man bei der Siedetemperatur des Lösungsmittels.

Die verwendbaren Ausgangsstoffe sind entweder bekannt oder können nach bekannten Verfahren hergestellt werden.

Im folgenden sei die Erfindung anhand einiger Beispiele zur Herstellung der neuen Dihydropyridin-Derivate erläutert.

Beispiele

2,6-Dimethyl-4-(3'-nitrophenyl)-1,4-dihydropyridin-3-carbonsäure-ß-trimethylsilyläthylester-5-carbonsäure-isopropylester

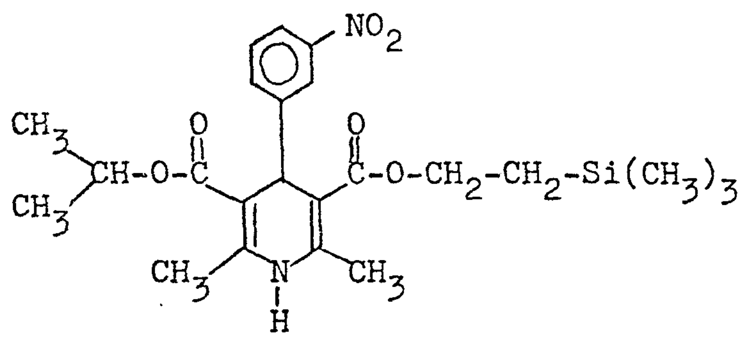

5,5 g 3-Aminocrotonsäure-ß-trimethylsilyläthylester und 7,6 g m-Nitrobenzylidenacetessigsäureisopropylester werden in einem Gemisch aus 30 ml Äthanol und 10 ml Eisessig 3 Stunden auf 100°C erhitzt. Man engt zur Trockne ein und erhält nach Reinigung (Trockensäule, Kieselgel, $CHCl_3$) 2,3 g (25 %) Produkt vom Fp.: 100°C.

In analoger Weise erhält man:
2,6-Dimethyl-4-(3'-nitrophenyl)-1,4-dihydropyridin-3-carbonsäure-ß-trimethylsilyläthylester-5-carbonsäuremethylester
Fp.: 140°C.

2,6-Dimethyl-4-(3'-nitrophenyl)-1,4-dihydropyridin-3-carbonsäure-ß-trimethylsilyläthylester-5-carbonsäure-äthylester
Fp.: 122°C.

Patentansprüche:

1. 1,4-Dihydropyridin-Derivate der Formel

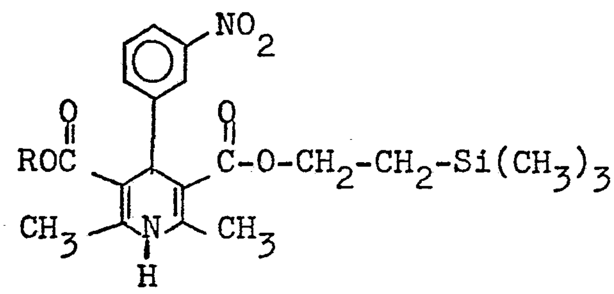

I

in der R einen geradkettigen oder verzweigten Alkylrest mit 1 bis 4 C-Atomen bedeutet.

2. Arzneimittel, gekennzeichnet durch einen Gehalt an 1,4-Dihydropyridinen gemäß Anspruch 1 und üblichen pharmazeutischen Hilfsstoffen.